# EUROPEAN PATENT SPECIFICATION

(11) **EP 2 433 485 B1**
(45) Date of publication and mention of the grant of the patent: **19.03.2014**
(21) Application number: 11172039.7
(22) Date of filing: 30.06.2011
(51) Int. Cl.: A01F 15/08, A01F 15/10

(54) **Agricultural piston press**
Landwirtschaftlicher Pressstempel
Presse à piston agricole

(30) Priority: 23.09.2010 DE 102010037724
(43) Date of publication of application: 28.03.2012
(73) Proprietor: Usines Claas France S.A.S, 57140 Metz (FR)
(72) Inventor: Altmeyer, Marc, 57320 Alzing (FR); Hesselmann, Ulrich, 66706 Perl (DE); Scharf, Thorsten, 66693 Orscholz (DE)
(74) Representative: Belda, Stefan Johannes

(56) References cited:
- EP-A1- 0 870 425
- EP-A1- 1 060 653
- EP-A1- 1 769 674
- DE-A1- 2 929 598
- GB-A- 755 857

## Description

The present invention relates to an agricultural piston press with which harvested crop picked up from a cultivated area is pressed into bale shape. Such a piston press is known for example from EP 1 769 674 B1.

This conventional piston press comprises a pressing chamber, in which a piston is oscillatingly driven in order to compress the harvested crop transported into the pressing chamber into a bale. The harvested crop enters the pressing channel via a pick-up device which pick-up device collects said harvested crop from the cultivated area, and a feeding channel, in which a so-called gatherer moves. The gatherer carries out two types of movements, namely a collecting stroke, during which it dips into the feeding channel adjacent to the inlet of the feeding channel and subsequently moves only through a front region of the feeding channel in order to pull harvested crop freshly transported into the feeding channel away from the inlet, pre-compress said harvested crop in a rear region of the feeding channel and in the process create space at the inlet for moving-up harvested crop, and a filling stroke, during which it moves from the inlet as far as to an outlet and through which the harvested crop accumulated and pre-compressed in the feeding channel is transported out of the feeding channel into the pressing chamber.

With both movements the opposing force, with which the harvested crop in the feeding channel opposes the movement of the gatherer, gradually increases during the course of the movement of the gatherer from a lower reversing point of its path at the inlet of the feeding channel to an upper reversing point at which it leaves the channel again. If the harvested crop contains foreign bodies or if material is jammed in the feeding channel the opposing force can become so great that an overload clutch arranged in the drive train of the gatherer has to react in order to prevent damage to the gatherer. If this happens, the harvested crop forces the gatherer back in the direction of its lower reversing point. While the gatherer proceeds towards the lower reversing point a part on the gatherer side and a part on the engine side of the overload clutch rotate in opposite directions. The rotational speed differential between the two clutch parts is therefore very high. This high rotational speed differential prevents that the overload clutch immediately re-engages when the opposing force of the harvested crop has dropped below the limit value. Instead, the overload clutch only closes again when the gatherer comes to rest again by itself and the harvested crop is largely relaxed again. Thus, the engine speed has to be reduced by the operator in order to allow resetting. The gatherer therefore meets with little or at most with a minor opposing force of the harvested crop immediately after the re-closing of the overload clutch accelerates and abruptly comes to a halt again when the opposing force again exceeds the limit value. There is a high risk that through repeated intense striking of the gatherer against the compressed harvested crop damages occur on the gatherer or its drive train.

In addition, instances of overloading in the drive train of the gatherer can occur because of other conceivable causes which lead to the overload clutch being triggered. Here, too, damages of gatherer or its drive train can be caused.

The object of the present invention is to reduce the risk of damaging the gatherer or other machine elements of the press in such a situation.

The object is solved in that with an agricultural piston press with a pressing chamber, in which a pressing piston is oscillatingly movable and a feeding channel, in which a gatherer is movable, in order to pre-compress and transport harvested crop into the pressing chamber, an overload clutch is provided in a drive train of the gatherer in order to interrupt the power transmission in the drive train in the event of overload and a further clutch device is provided in the drive train of the gatherer, which stops a movement of the gatherer when the overload clutch is at least partially opened. The clutch device, by blocking the gatherer in the case of overload on the one hand prevents that the gatherer after the opening of the overload clutch is greatly accelerated by the opposing force of the harvested crop contrary to its normal movement direction and thereby limits the possible rotational speed differential between the part of the overload clutch on the gatherer side and on the engine side. Thus rapid re-closing of the overload clutch is possible. On the other hand, blocking of the gatherer prevents complete relaxation of the pre-compressed harvested crop in the feeding channel so that when the overload clutch closes again, the gatherer is immediately exposed to an opposing force that cannot be neglected. Between re-closing and a possible renewed opening of the overload clutch the gatherer cannot therefore reach a high speed so that the risk of damage is low.

In principle, the additional clutch device which more preferably prevents a movement of the gatherer opposite to its movement direction driven via the drive train, can be embodied in the manner of a freewheel. Since a continuously active freewheel however would also block reverse movements of the gatherer which on start-up of the piston press or during maintenance operation could be required, it is preferred that the clutch device is functionally coupled to the overload clutch in order to block the movement of the gatherer only then, when the overload clutch is at least partially opened. In a particularly advantageous manner the clutch device is therefore designed as a switchable freewheel. In this manner, a reverse movement of the gatherer can be blocked during overload but a forward movement is possible even with the clutch device engaged. Following renewed closing of the overload clutch this does away with the necessity of disengaging the clutch device before pressing operation is resumed.

The additional clutch device can comprise a toothed disc connected to a driveshaft of the gatherer in a rotationally fixed manner and a pawl engageable in teeth of the toothed discs for blocking the gatherer. The number of the teeth of toothed disc and if applicable a transmission ratio effective between the driveshaft and the gatherer determines the number of the blocking positions that can be realised through such a clutch device between the lower and the upper reversing position.

The further clutch device can be coupled to the overload clutch more preferably via an actuator. Said actuated can advantageously comprise at least one cylinder and one spring acting against the cylinder, wherein the cylinder can be subjected to pressure in order to hold the clutch device in a state not blocking the gatherer and the spring is arranged in order to bring the clutch device into the blocked state in the absence of pressure in the cylinder. Such a structure of the actuator allows that the further clutch device becomes effective (engages) very quickly through spring force, whereas the feed of pressure medium to the cylinder required for disengaging the further clutch device is allowed to take a clearly longer time without substantial disadvantages.

The clutch device should be equipped so as not to block the gatherer directly in the position held on interruption of the power transmission through the overload clutch, but between that position and a position of rest reachable under the influence of the opposing force. Thus it is guaranteed that the harvested crop compressed by the gatherer can relax again only partially and the opposing force which it exerts on the gatherer in the blocking position on the one hand is not zero, but on the other hand is lower than the limit value so that re-closing of the overload clutch is possible.

If exceeding of the limit value of the opposing force has occurred and the overload clutch has therefore opened, it is desirable after the opposing force has again dropped below the limit value that it closes again as soon as possible. To this end it is practical if the clutch device on the path between the lower and the upper reversing position of the gatherer defines a plurality of discrete positions in which the gatherer can be blocked so that it can block in the respective first one of these positions reached.

Alternatively to a freewheel, the clutch device can be designed as a brake.

Further features and advantages of the invention are obtained from the following description of exemplary embodiments making reference to the enclosed drawings. It shows:
- Fig. 1: the piston press according to the invention in lateral view; and
- Fig. 2: a perspective view of a clutch device of the piston press.

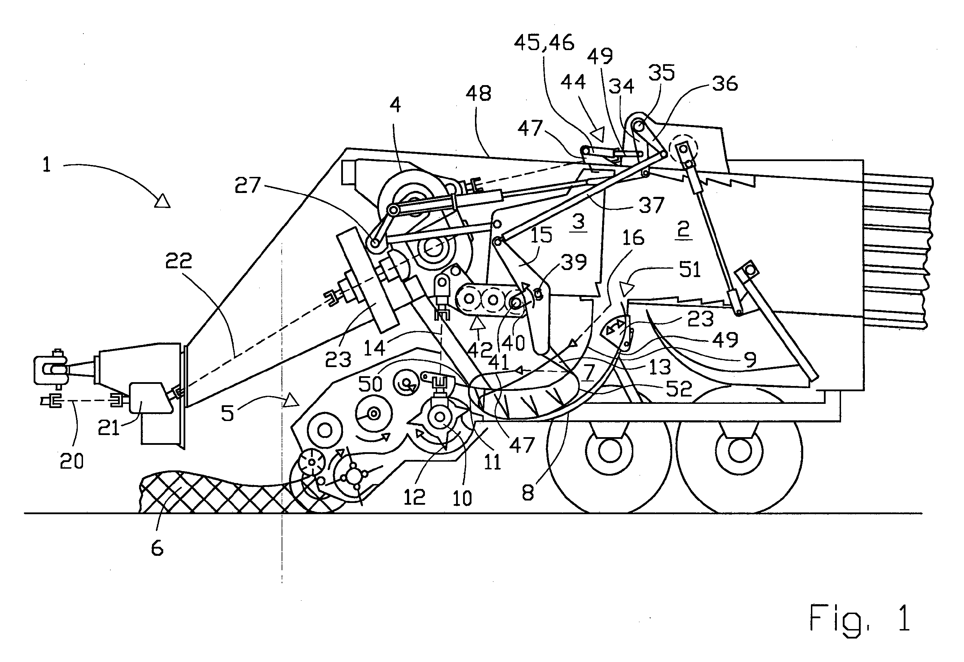

The piston press 1 shown in schematic lateral view in Fig. 1 is designed as a trailer for hitching to a traction vehicle which is not shown. It comprises a pick-up device 5, also called pick-up, for picking-up harvested crop 6 from the floor. The harvested crop collected by the pick-up device 5 and reduced by a cutting device 10 is transported to an inlet 11 of a feeding channel 7 whose outlet 16 terminates in a press chamber 2. A pressing piston 3 that can be moved to and fro in the press chamber 2 compresses the fed-in harvested crop, wherein compressed harvested crop located further downstream in the press chamber 2 and already completed pressed bales serve as abutment for compressing.

The feeding channel 7 extends arch-shaped between its inlet 11 and the outlet 16 and is delimited by a floor 8 which is concave on its surface facing the feeding channel 7 and a ceiling 9 which is convex on its surface facing the feeding channel 7. The floor 9 comprises a plurality of longitudinal slits through which gathering tines 13 fastened to a gatherer lever 15 can dip into the feed channel 7. An axle 39 of the gatherer levers is driven by a gatherer crank 40 on a circular path about an output shaft 41. The output shaft 41 is coupled to a main gearing 4 via a spur gearing 42 which itself is coupled to the traction vehicle via a universal shaft 22, an angular drive 22 and a further universal shaft 20 and is supplied with drive energy by said traction vehicle.

The pick-up device 5 and the cutting device 10 are driven via a universal shaft 14 emanating from the main gearing 4.

The main gearing 4 comprises an overload clutch of a design known per se, to the output side of which the universal shaft 14 as well as the spur gearing 42 are connected, and which is equipped to open when the torque effective between its drive and output side reaches a predetermined limit value.

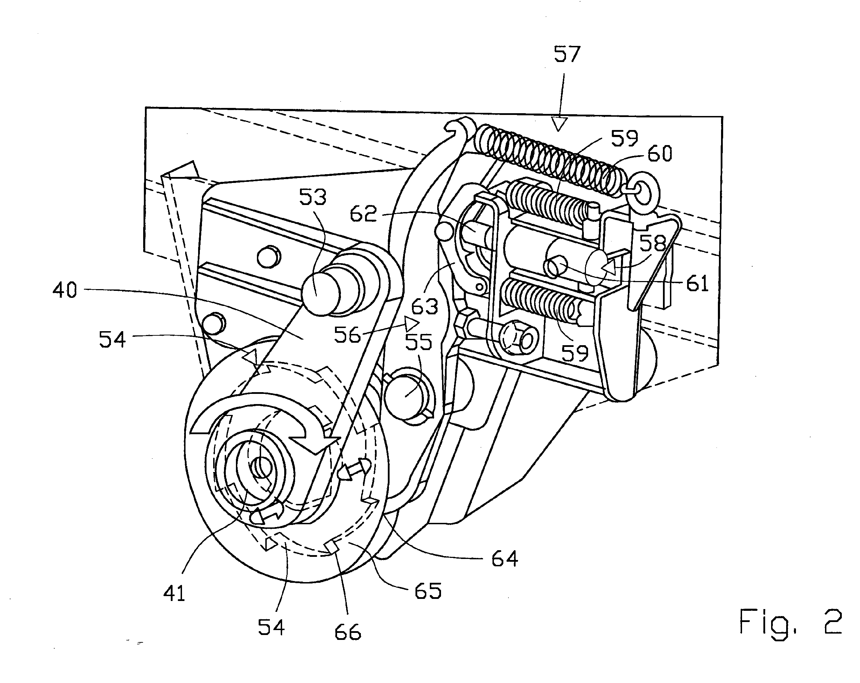

The gatherer lever 15 is connected to a gatherer control arm 36 arranged above the press chamber 2 via a coupling rod 37. Depending on which position the gatherer control arm 36 assumes, the rotation of the gatherer crank 40 either drives a collecting movement wherein the tips of the gathering tines 13 move on a path substantially elliptical in shape designated 47 in Fig. 1 or a filling stroke movement during which the tips move on a crescent-shaped path 49. The paths 47, 49 have a common lower reversing point 50 at which the gathering tines 13 dip into the feeding channel 7. An upper reversing point in the case of path 49 lies at the height of the outlet 16 of the feeding channel 7 and is designated 51. An upper reversing point 52 of the path 47 lies in a central region of the feeding channel. Through the collecting strokes corresponding to the path 47 harvested crop is removed from the inlet 14 and in a rear region of the feeding channel 7, between the reversing point 52 and a hinged flap 23 protruding into the feeding channel 7, pre-compressed. In the process, instances of exceeding of the limit torque of the overload clutch can occur particularly in the event that foreign bodies enter the harvested crop. During a filling stroke instances of exceeding of the limit torque are conceivable if the flap 23 blocks instead of clearing the way to the press chamber 2 or if insufficiently compressed material in the press chamber 2 blocks the outlet 16. In any case, the overload clutch opens and simultaneously supplies a control signal indicating its opened state to a clutch device arranged on the output shaft 41, which is described in more detail with reference to Fig. 2.

Fig. 2 shows in perspective view a part of the spur gearing 42 with the output shaft 41 and the gatherer crank 40 mounted thereon. At the free end of the gatherer crank a pin 53 is visible which is provided in order to carry the gatherer lever 15, the gatherer lever 15 itself however has been omitted in order to be better able to show the clutch device acting on the output shaft 41. This clutch device comprises a toothed disc 54 mounted on the output shaft, a pawl 56 pivotable about an axle 55 and an actuator 57 for controlling the position of the pawl 56. The actuator 57 comprises an hydraulic cylinder 58 as well as coil springs 59, 60 flanking the hydraulic cylinder 58. Under the influence of hydraulic oil fed in under high pressure at a connection 61 of the cylinder 58 a piston 62 of the cylinder 58 is extended and presses against a arm 63 wherein it tensions the springs acting on the arm 63 on both sides of the cylinder 58. The spring 60 holds an arm of the pawl 56 pressed against the arm 63.

The overload clutch mechanically or electrically controls the hydrostatic pressure at the connection 61. As soon as the overload clutch opens, this pressure collapses, the piston 62 retracts into the cylinder 58 under the influence of the springs 59 and the pawl 56 follows that movement driven by the spring 60. Because of this, a second arm of the pawl 56 moves forward towards the toothed disc 54 until finally its tip 64 engages in an intermediate space 65 between two teeth of the toothed disc 54. The gathering tines 13 yield before the pressure of the harvested crop in the feed channel 7 as a result of which rotation of the gatherer crank 40 is driven in counter-clockwise direction. This results in that the tip 64 strikes a steep flank 66 of the intermediate space 65 and blocks the movement of the gathering tines 13.

With the configuration shown in Fig. 2 the toothed disc 54 has eight teeth and a revolution of the gatherer crank 40 in clockwise direction (based on the viewing direction of Fig. 2) drives a collecting or filling stroke of the gathering tines 13. There are therefore a total of eight possible positions on the two paths 47, 49 in which the toothed disc 54 can be blocked, half of which positions occur on the path of the gathering tines 13 from the lower reversing point 50 to the upper reversing point 52 and 51 and thus on the part of the path 47 and 49 on which impediment of the movement of the gathering tines 15 by the harvested crop in the feeding channel 7 is possible. Thus the distance which the gathering tines 13 during the opening of the overload clutch can cover back in the direction of the lower reversing point 50 before the clutch device becomes effective, is maximally a fourth of the distance between the reversing points. As soon as the gatherer on its regular path from the lower reversing point 50 to the upper reversing point 51 or 52 has passed the first of these blocking positions it is retained in the respective blocking position last passed but cannot return to the lower reversing point 50 if subsequently an excessive opposing force causes the overload clutch to open and it yields to the opposing force. As a result of this it takes only a short time until the reverse rotation of the output shaft 41 ceases and the overload clutch can close again.

In order to control the hydraulic cylinder 58 the opening and closing movement of the overload clutch can directly actuate a directional control valve which connects the connection 61 of the cylinder 58 with closed overload clutch to a high-pressure reservoir and with open overload clutch to a pressureless tank. In order to bridge the spatial distance between the overload clutch and the cylinder 58 it is however also conceivable to attach an electric switch actuated through the opening and closing movement of the overload clutch to the overload clutch and a solenoid valve controlled by the switch to the connection 61.

According to a further configuration of the invention which is not drawn the clutch device of Fig. 2 acting through positive connection between the toothed disc 54 and the pawl 56 can also be replaced with a frictionally acting brake such as for example a disc or drum brake widely employed on the wheels of motor vehicles. In contrast with the toothed disc 54 such a brake which can be arranged on the output shaft 41 or another shaft of the gearing 42 connected to said output shaft in a rotationally fixed manner can bring the gatherer to a halt in any position of its path through the feeding channel 7. Limited relaxation of the compressed harvested material before the blocking of the gatherer is also possible here and results from the time the shoes of the brake take to leave their positions of rest and engage with a disc or drum of the brake.

### List of reference numbers

- 1: Piston press
- 2: Press chamber
- 3: Pressing piston
- 4: Main gearing
- 5: Pick-up device
- 6: Harvested crop
- 7: Feeding channel
- 8: Floor
- 9: Ceiling
- 10: Cutting device
- 11: Inlet
- 13: Gathering tines
- 14: Universal shaft
- 15: Gatherer lever
- 16: Outlet
- 20: Universal shaft
- 21: Angular drive
- 22: Universal shaft
- 23: Flap
- 36: Gatherer control arm
- 37: Coupling rod
- 40: Gatherer crank
- 41: Output shaft
- 42: Spur gearing
- 47: Path
- 49: Path
- 50: Lower reversing point
- 51: Upper reversing point
- 52: Upper reversing point
- 53: Pin
- 54: Toothed disc
- 55: Axle
- 56: Pawl
- 57: Actuator
- 58: Hydraulic cylinder
- 59: Spring
- 60: Spring
- 61: Connection
- 62: Piston
- 63: Arm
- 64: Tip
- 65: Intermediate space
- 66: Steep flank

## Claims

1. An agricultural piston press (1) with a press chamber (2) in which a pressing piston (3) is oscillatingly moveable, and a feeding channel (7) in which a gatherer (13) is moveable in order to pre-compress and transport harvested crop onward into the press chamber (2), wherein in a drive train of the gatherer (13) an overload clutch is provided in order to interrupt the power transmission in the drive train in the event of overload, **characterized by** a further clutch device (54-66) in the drive train of the gatherer (13) which stops a movement of the gatherer (13) when the overload clutch is at least partially opened.

2. The agricultural piston press according to claim 1, **characterized in that** the clutch device (54-66) is designed as switchable freewheel.

3. The agricultural piston press according to claim 1 or 2, **characterized in that** the clutch device (54-66) comprises a toothed disc (54) connected to a drive shaft (4) of the gatherer (13) in a rotationally fixed manner and a pawl (56) engagable between teeth of the toothed disc (54).

4. The agricultural piston press according to any one of the preceding claims, **characterized in that** the clutch device (54-66) is coupled to the overload clutch via an actuator (57) which comprises at least one cylinder (58) and a spring (59; 60) counteracting the cylinder (58), wherein the cylinder (58) can be subjected to pressure in order to hold the clutch device (54-66) in a disengaged state and the spring (59; 60) is arranged in order to put the clutch device (54-66) in the engaged state in the absence of pressure in the cylinder (58).

5. The agricultural piston press according to any one of the preceding claims, **characterized in that** the clutch device (54-56) equipped to block the gatherer (13) in a clutch position which lies between a position occupied by the overload clutch during the interruption of the power transmission and a rest position (50) reachable under the influence of an opposing force exerted on the gatherer (13) by the harvested crop.

6. The agricultural piston press according to any one of the preceding claims, **characterized in that** the gatherer (13) in the feeding channel (7) is moveable from a lower reversing position (50) to an upper reversing position (51; 52) and **in that** the clutch device (54-66) on the way between the lower (50) and the upper reversing position (51; 52) defines a plurality of discrete positions in which the gatherer (13) is engagable.

7. The agricultural piston press according to Claim 1, **characterized in that** the clutch device is designed as a brake.

## Patentansprüche

1. Landwirtschaftliche Kolbenpresse (1) mit einer Presskammer (2), in welcher ein Presskolben (3) hinund hergehend bewegbar ist, und einem Zuführkanal (7), in welchem ein Raffer (13) bewegbar ist, um Erntegut vorzuverdichten und in die Presskammer (2) weiterzubefördern, wobei in einem Antriebsstrang des Raffers (13) eine Überlastkupplung vorgesehen ist, um die Kraftübertragung im Antriebsstrang im Falle einer Überlast zu unterbrechen,
**gekennzeichnet durch** eine weitere Kupplungsvorrichtung (54-66) im Antriebsstrang des Raffers (13), welche eine Bewegung des Raffers (13) stoppt, wenn die Überlastkupplung wenigstens teilweise geöffnet ist.

2. Landwirtschaftliche Kolbenpresse nach Anspruch 1, **dadurch gekennzeichnet, dass** die Kupplungsvorrichtung (54-66) als schaltbarer Freilauf gestaltet ist.

3. Landwirtschaftliche Kolbenpresse nach Anspruch 1 oder 2, **dadurch gekennzeichnet, dass** die Kupplungsvorrichtung (54-66) eine mit einer Antriebswelle (4) des Raffers (13) drehfest verbundene Zahnscheibe (54) und eine zwischen Zähne der Zahnscheibe (54) einrastbare Klinke (56) umfasst.

4. Landwirtschaftliche Kolbenpresse nach einem der vorhergehenden Ansprüche, **dadurch gekennzeichnet, dass** die Kupplungsvorrichtung (54-66) an die Überlastkupplung über einen Aktor (57) gekoppelt ist, welcher mindestens einen Zylinder (58) und eine dem Zylinder (58) entgegenwirkende Feder (59; 60) umfasst, wobei der Zylinder (58) mit Druck beaufschlagt werden kann, um die Kupplungsvorrichtung (54-66) in einem ausgekuppelten Zustand zu halten, und die Feder (59; 60) dafür eingerichtet ist, die Kupplungsvorrichtung (54-66) in den eingekuppelten Zustand zu versetzen, wenn kein Druck im Zylinder (58) vorhanden ist.

5. Landwirtschaftliche Kolbenpresse nach einem der vorhergehenden Ansprüche, **dadurch gekennzeichnet, dass** die Kupplungsvorrichtung (54-66) dafür eingerichtet ist, den Raffer (13) in einer Kupplungsposition zu blockieren, welche zwischen einer Position, die von der Überlastkupplung während der Unterbrechung der Kraftübertragung eingenommen wird, und einer Ruheposition (50), die unter dem Einfluss einer vom Erntegut auf den Raffer (13) ausgeübten Gegenkraft erreichbar ist, liegt.

6. Landwirtschaftliche Kolbenpresse nach einem der vorhergehenden Ansprüche, **dadurch gekennzeichnet, dass** der Raffer (13) in dem Zuführkanal (7) von einer unteren Wendeposition (50) zu einer oberen Wendeposition (51; 52) bewegbar ist, und dadurch, dass die Kupplungsvorrichtung (54-66) auf dem Weg zwischen der unteren (50) und der oberen Wendeposition (51; 52) mehrere diskrete Positionen definiert, an welchen der Raffer (13) einkuppelbar ist.

7. Landwirtschaftliche Kolbenpresse nach Anspruch 1, **dadurch gekennzeichnet, dass** die Kupplungsvorrichtung als Bremse gestaltet ist.

## Revendications

1. Presse à piston agricole (1) comportant une chambre de presse (2) dans laquelle un piston de poussée (3) est mobile de façon oscillante, et un canal d'alimentation (7) dans lequel un collecteur (13) est mobile afin de pré-comprimer et faire avancer une culture récoltée dans la chambre de presse (2), dans laquelle dans une transmission du collecteur (13), un limiteur de couple à friction est placé afin d'interrompre la transmission de puissance dans la transmission en cas de surcharge,
**caractérisée par** un dispositif d'embrayage supplémentaire (54-66) dans la transmission du collecteur (13) qui arrête un mouvement du collecteur (13) quand le limiteur de couple à friction est au moins partiellement ouvert.

2. Presse à piston agricole selon la revendication 1, **caractérisée en ce que** le dispositif d'embrayage (54-66) est conçu sous forme de roue libre débrayable.

3. Presse à piston agricole selon la revendication 1 ou 2, **caractérisée en ce que** le dispositif d'embrayage (54-66) comprend un disque denté (54) connecté à un arbre d'entraînement (4) du collecteur (13) de manière fixe en rotation et un cliquet d'arrêt (56) pouvant s'engager entre les dents du disque denté (54).

4. Presse à piston agricole selon l'une quelconque des revendications précédentes, **caractérisée en ce que** le dispositif d'embrayage (54-66) est accouplé au limiteur de couple à friction par l'intermédiaire d'un actionneur (57) qui comprend au moins un vérin (58) et un ressort (59 ; 60) qui s'oppose au vérin (58), dans lequel le vérin (58) peut être soumis à une pression afin de maintenir le dispositif d'embrayage (54-66) dans un état débrayé et le ressort (59 ; 60) est agencé pour mettre le dispositif d'embrayage (54-66) dans l'état embrayé en l'absence de pression dans le vérin (58).

5. Presse à piston agricole selon l'une quelconque des revendications précédentes, **caractérisée en ce que** le dispositif d'embrayage (54-56) est équipé pour bloquer le collecteur (13) dans une position d'embrayage qui se situe entre une position occupée par le limiteur de couple à friction pendant l'interruption de la transmission de puissance et une position de repos (50) qui peut être atteinte sous l'influence d'une force contraire exercée sur le collecteur (13) par la culture récoltée.

6. Presse à piston agricole selon l'une quelconque des revendications précédentes, **caractérisée en ce que** le collecteur (13) est mobile dans le canal d'alimentation (7) d'une position d'inversion inférieure (50) à une position d'inversion supérieure (51 ; 52) et **en ce que** le dispositif d'embrayage (54-66), lors de son déplacement entre les positions d'inversion inférieure (50) et supérieure (51 ; 52) définit une pluralité de positions discrètes dans lesquelles le collecteur (13) peut être mis en prise.

7. Presse à piston agricole selon la revendication 1, **caractérisée en ce que** le dispositif d'embrayage est conçu en tant que frein.
